# FASCICULE DE BREVET EUROPEEN

(11) **EP 3 682 492 B1**
(45) Date de publication et mention de la délivrance du brevet: **17.11.2021**
(21) Numéro de dépôt: 18773797.8
(22) Date de dépôt: 31.08.2018
(51) Int. Cl.: H01M 50/517, H01M 50/588

(54) **SYSTEME DE PROTECTION ET D'ISOLATION D'UNE BARRE OMNIBUS DE VEHICULE AUTOMOBILE**
SYSTEM ZUM SCHUTZ UND ISOLIEREN EINER SAMMELSCHIENE EINES KRAFTFAHRZEUGES
SYSTEM FOR PROTECTING AND INSULATING A BUS BAR OF A MOTOR VEHICLE

(30) Priorité: 13.09.2017 FR 1758495
(43) Date de publication de la demande: 22.07.2020
(73) Titulaire: PSA Automobiles SA, 78300 Poissy (FR)
(72) Inventeur: ROULLAIS, Sylvie, 25420 COURCELLES LES MONTBELIARD (FR); ANDRE, Antoine, 25000 BESANCON (FR)
(86) Numéro de dépôt international: PCT/FR2018/052139
(87) Numéro de publication internationale: WO 2019/053353

(56) Documents cités:
- EP-A1- 2 688 122
- CN-U- 205 303 606
- CN-U- 206 003 876
- FR-A- 1 533 493
- US-A1- 2006 105 624

## Description

L'invention a pour objet un système de protection et d'isolation d'une barre omnibus de véhicule automobile. Plus particulièrement, l'invention entend proposer une solution pour protéger et isoler électriquement un type particulier de câble électrique de véhicule automobile qui transporte une tension élevée (≥ 450 Volts), d'où des risques spécifiques, ces câbles électriques étant connus à l'heure actuelle sous l'appellation de bus bar ou barre omnibus.

Un engin électrique tel qu'une voiture électrique ou une voiture hybride comporte un bloc batterie comprenant une pluralité de cellules de batteries. Le bloc batterie comprend donc une pluralité de cellules de batterie dans lesquelles les électrodes positives et les électrodes négatives sont agencées adjacentes les unes aux autres, et les électrodes positives et les électrodes négatives de deux cellules de batterie adjacentes sont couplées l'une à l'autre via une barre omnibus. Ainsi, un bloc batterie est constitué par la mise en connexion, en série, de toutes les cellules de batterie, de sorte qu'une tension de sortie élevée peut être délivrée (≥ 450 Volts).

Une barre omnibus pour bloc batterie se présente classiquement sous la forme d'une barre rigide qui est formé par un conducteur, par exemple en cuivre, revêtu d'un isolant sur toute sa longueur. Une barre omnibus comporte, à ses deux extrémités, une paire de deux orifices dans lesquels les électrodes, négative et positive, de deux batteries sont introduites. Les barres omnibus se positionnent de manière optimale dans l'environnement de la batterie (zones étroites, passages sinueux etc.).

Dans un bloc batterie, une pluralité de barres omnibus sont souvent maintenus solidairement par un support non-conducteur. Le support comporte une pluralité de capot de protection isolant qui sont chacun fixés à l'extrémité d'une barre omnibus. Un tel capot de protection permet classiquement d'éviter tout contact physique d'une partie (ses extrémités) de la barre omnibus.

Ainsi, on connaît le brevet EP 1872421 qui décrit un boîtier ou support de connexion de barres omnibus, ou bus bars, comportant un capot de protection isolant. On connaît également le brevet EP 2688122 qui décrit un module de câblage comportant des barres omnibus comportant des éléments d'isolation ayant un ou les deux trous de connexion présentant une forme oblongue.

Un capot de protection, recouvrant partiellement la barre omnibus, est fixé classiquement à chacune des extrémités dudit câble, la connexion de la barre omnibus aux électrodes étant sécurisée par des vis de fixation aptes à maintenir ces éléments étroitement solidaires.

Les vis de fixation présentent classiquement une tête et un corps de vis, ce dernier étant protubérant sous la barre omnibus une fois la vis de fixation positionnée (dite en position de vissage) pour son emploi.

En particulier au cours de l'assemblage du bloc batterie, lorsque l'électrode positive est connectée, il existe un risque non négligeable d'un contact accidentel du corps de vis avec la caisse ou un autre élément métallique du véhicule, ce qui génère un court circuit et peut éventuellement occasionner des blessures graves (brûlures par contact des éléments conducteur) à l'opérateur.

Par ailleurs, au cours du cycle d'utilisation du véhicule, il est toujours possible, bien que rare, qu'un élément métallique du véhicule, sorti de son positionnement initial, viennent contacter la vis de fixation entrainant de la même façon un court circuit.

On connaît le document CN-U-205 303 606 divulguant le préambule de la revendication 1.

A l'heure actuelle, il n'existe sur le marché aucun moyen pour prévenir de tels phénomènes de court circuit ou de blessures de l'opérateur.

La présente invention entend proposer une solution simple et économique pour protéger et isoler électriquement les vis de fixation une fois dans leur position d'emploi, lors de l'assemblage initial et/ou pendant toute la durée d'utilisation de la barre omnibus dans le véhicule.

Dans ce but, la présente invention propose un système de protection et d'isolation d'une barre omnibus selon la revendication 1, comportant une barre omnibus et au moins une vis de fixation, comportant un corps et une tête de vis, pour la fixation entre ledit câble et une source d'alimentation électrique, la barre omnibus présentant un orifice pour le passage du corps de chacune des vis, caractérisé en ce que la partie du corps des vis protubérante par rapport au barre omnibus est recouverte intégralement par un capuchon électriquement isolant.

On entend par l'expression « la partie du corps des vis protubérante par rapport au barre omnibus » toute la longueur du corps de vis à l'exception de celle présente dans l'orifice dédié de la barre omnibus. Autrement dit, toute la longueur du corps de vis à l'exception de la partie cylindrique entourée par le câble ou en contact direct avec ce dernier.

Grâce à l'invention, une fois la vis de fixation dans sa position de vissage, le capuchon électriquement isolant vient garantir qu'aucun contact néfaste (contact électriquement conducteur) ne se produise avec le corps de vis. Cette solution est simple, peu couteuse et assure un degré d'isolation électrique optimum au niveau de la zone la moins protégée jusqu'alors, à savoir la zone de connexion câble/électrodes (incluant bien entendu les corps de vis de fixation).

Avantageusement, le susdit capuchon est amovible.

Dans son acceptation la plus large, la présente invention entend permettre de disposer du capuchon de protection tout au long de la vie du barre omnibus, étant entendu que le capuchon doit pouvoir être retiré pour permettre le vissage de la vis de fixation. Néanmoins elle trouve plus particulièrement à s'appliquer lors de l'assemblage/montage du barre omnibus sur un bloc batterie (de façon sensiblement identique lors du démontage du barre omnibus). En effet, c'est lors de cet assemblage que le risque d'arcs électriques ou de courts circuits est le plus élevé et fréquent. Ainsi, une fois l'assemblage réalisé, en évitant de tels risques grâce à la solution selon l'invention, le capuchon de protection peut être retiré du fait de son caractère avantageusement amovible. Ceci permet notamment le réemploi du capuchon de protection pour un autre montage/assemblage de barres omnibus sur une autre batterie ou un autre bloc batterie.

Selon un mode d'exécution de l'invention, le susdit capuchon consiste en une pluralité de manchons individuels disposés respectivement sur chacune des vis de fixation.

Selon un autre mode d'exécution de l'invention, les manchons sont reliés entre eux par un revêtement électriquement isolant formant une couche de protection (et d'isolation) sur la barre omnibus.

Ainsi, le capuchon de protection selon l'invention peut être réalisé en un élément unique ou en une pluralité de parties (manchons de recouvrement des corps de vis) et, quel que soit son mode de réalisation, le capuchon de protection est éventuellement amovible.

Selon une possibilité offerte par l'invention, avantageusement, le susdit capuchon comporte une languette protubérante pour sa saisie par un opérateur.

Ainsi, il est plus facile pour l'opérateur de saisir le capuchon pour l'extraire à son positionnement, une fois l'assemblage du barre omnibus sur le bloc batterie réalisé. Bien entendu, cette caractéristique s'entend en particulier lorsque le capuchon de protection présente un caractère amovible mais cette languette peut également être utile lorsque le capuchon ne présente pas un tel caractère d'amovibilité (à savoir qu'il est fixé, par exemple par collage, au corps de vis) mais qu'il est devenu nécessaire de le retirer.

Avantageusement, le susdit capuchon est en matière plastique.

Selon une possibilité offerte par l'invention, le système selon l'invention comprend en outre un capot de protection, (également) électriquement isolant, recouvrant au moins partiellement la barre omnibus et étant en contact avec le capuchon.

Un tel capot permet classiquement d'isoler d'un contact physique une partie (ses extrémités) de la barre omnibus. Par cette caractéristique, la présente invention entend remédier à un inconvénient de l'art antérieur.

En effet, les capots de protection de l'état de la technique ne recouvrent pas toute l'extrémité de la barre omnibus sur lesquels ils sont fixés. Or, comme expliqué précédemment, lors d'un montage, un contact accidentel entre l'extrémité non protégée de la barre omnibus et la caisse peut se produire, créant des arcs électriques pouvant conduire à un court-circuit aggravé. Ces arcs électriques peuvent causer des blessures graves à l'opérateur (brûlures) et détériorer la pièce, la rendant de ce fait inutilisable (enlèvement de matière isolante).

Le capot de protection assure une protection complémentaire à celle du capuchon selon l'invention.

Avantageusement, le capot de protection présente plusieurs orifices pour le passage respectif des têtes de vis de fixation et la largeur des orifices du capot de protection est au plus égale au diamètre de la tête de vis.

Grâce à cette caractéristique, une fois la vis de fixation dans sa position de vissage, elle est contrainte par serrage et frottement par le capot de protection, au niveau de sa tête de vis en contact avec les parois de l'orifice du capot de protection, de sorte qu'elle ne peut plus se déplacer pendant le cycle d'utilisation du véhicule, quelque soient les conditions de roulage du véhicule automobile.

Cette caractéristique permet de rendre les vis de fixation imperdables sans nécessiter de pièce additionnelle de sorte que cette solution est à la fois économique et simple (sans ajout de poids au véhicule).

De façon plus précise, avantageusement, la largeur de l'orifice du capot de protection est inférieure, d'au moins 0,1 millimètre et d'au plus un millimètre, au diamètre de la tête de vis.

Dans le même but, la présente invention propose également un véhicule automobile, caractérisé en ce qu'il comporte au moins un système de protection et d'isolation d'une barre omnibus tel que succinctement décrit ci-dessus.

D'autres aspects et avantages de l'invention apparaîtront à la lecture de la description qui suit d'un mode particulier de réalisation, donné à titre d'exemple non limitatif et en référence aux dessins qui l'accompagnent, dans lesquels :
- la figure 1 est une représentation schématique d'une barre omnibus classique ;
- la figure 2 est une vue en coupe illustrant un mode d'exécution d'un capuchon de protection selon l'invention positionné sur des vis de fixation elle-même fixées à une barre omnibus ;
- la figure 3 est une vue en coupe illustrant un autre mode d'exécution d'un capuchon de protection selon l'invention positionné sur des vis de fixation elle-même fixées à une barre omnibus ;
- la figure 4 est une vue en coupe illustrant une autre variante d'exécution selon l'invention dans laquelle, outre le capuchon de protection, il est prévu un capot de protection du barre omnibus.

La source d'alimentation électrique mentionnée ci-dessus consiste en une batterie, non représentée sur les figures annexées. Cette batterie comprend classiquement deux électrodes, l'une positive et l'autre négative qui sont chacune insérée respectivement dans l'un des deux trous 1, 2 présents aux deux extrémités du barre omnibus 3, une vis de fixation étant ensuite vissée pour maintenir un contact électriquement conducteur entre la barre omnibus 3 et chacune des électrodes.

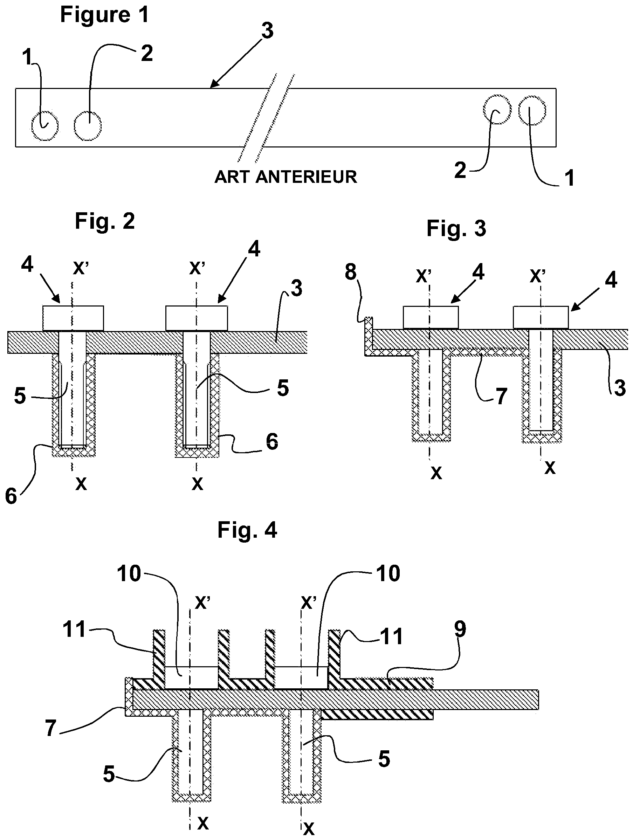

La figure 1 représente ainsi une barre omnibus classique 3, avec ses deux orifices 1, 2, à ses deux extrémités, permettant le passage de vis de fixation 4 pour la fixation du barre omnibus 3 aux électrodes de deux cellules de batteries adjacentes.

La figure 2 présente un mode d'exécution d'un capuchon de protection selon l'invention. Sur cette figure en coupe sont représentés deux vis de fixation 4, traditionnellement le nombre de vis nécessaire à la fixation d'une barre omnibus à l'une de ses extrémités. Comme on peut le voir sur cette figure, les vis de fixation 4 s'étendent suivant un axe longitudinal XX' déterminé par l'axe des corps 5 de vis 4.

Dans ce mode d'exécution, le capuchon selon l'invention se présente sous la forme de deux manchons 6, 6' individuels recouvrant respectivement chacun les corps 5 de vis 4.

Dans le mode d'exécution représenté sur la figure 3, le capuchon de protection consiste en un seul élément 7, recouvrant toujours les deux corps 5 de vis 4, de sorte que par rapport au mode de réalisation de la figure 2, la différence réside essentiellement dans le fait que les manchons 6, représentés sur la figure 2, sont reliés entre eux par matière, également électriquement isolante.

Sur la figure 3, le capuchon de protection 7 présente, à l'une de ses extrémités, une languette de préhension protubérante 8 pour faciliter sa saisie par un utilisateur/opérateur. Les manchons 6 formant le capuchon de protection représenté sur la figure 2 peuvent également comporter une telle languette protubérante, par exemple située à proximité de l'extrémité inférieure des corps 5 de vis 4.

Bien entendu, la forme et les dimensions du capuchon de protection 6 ou 7 sont adaptées à celles du corps 5 de vis 4 qu'il doit intégralement recouvrir.

Le capuchon de protection, qu'il soit monobloc 7 ou réalisé en plusieurs parties 6, consiste en un matériau plastique, avantageusement souple, pour pouvoir se placer sans difficulté sur le corps 5 des vis 4. Ce matériau plastique, avantageusement souple, peut consister en un thermoplastique ou en un thermodurcissable.

Ce thermoplastique pourra consister en une polyoléfine, par exemple un polyéthylène (basse ou haute densité) ou un PVC, en un polystyrénique, par exemple un polystyrène choc, en un acétate de cellulose, ou encore en un polyimide.

Le capuchon de protection 6, 7 peut également consister en un thermodurcissable, en particulier une silicone (de la famille des polyoranolsiloxanes).

Le capuchon de protection 6, 7 selon l'invention est avantageusement amovible. Dans l'hypothèse où il est n'est pas amovible, les surfaces internes du capuchon 6, 7, en contact ou à très faible proximité des corps 5 de vis 4, peuvent présenter au moins un point de colle destiné à fixer définitivement le capuchon 6, 7 au vis 4. Ces points de colle peuvent également être présents sur les corps 5 de vis 4, voire sur la surface externe du barre omnibus 3, plutôt que sur les surfaces internes du capuchon de protection 6, 7. Tout autre moyen, mécanique ou chimique, de fixation du capuchon 6, 7 à une vis de fixation 4 peut être envisagé comme moyen de fixation temporaire du capuchon avant assemblage, les capuchons devant être retirés pour pouvoir visser les vis sur le bloc batterie.

Sur la figure 4 est représenté un mode d'exécution complémentaire dans lequel il est prévu, outre le capuchon 6, 7, un capot de protection 9 destiné à isoler (électriquement) et protéger d'une part la barre omnibus 3 d'un contact physique avec un autre élément de la caisse et d'autre part les têtes 10 de vis 4.

Ce capot de protection 9 est réalisé en une matière identique ou non au capuchon de protection 6, 7 mais présente une même fonction, d'isolation et de protection, de la barre omnibus 3 ainsi que de la connexion entre ce dernier et les électrodes de la batterie. Par ailleurs, ce capot de protection 9 peut être relié ou non au capuchon 6, 7. Dans le mode d'exécution présenté sur cette figure, le capuchon 7 est en contact, mais non physiquement relié, au capot de protection 9 de sorte que toute l'extrémité du barre omnibus 3 se trouve électriquement isolé et protéger par le capuchon 7 et le capot de protection 9.

Un tel ensemble de protection 6, 7 et 9 selon l'invention permet d'une part de prévenir tout risque d'arcs électriques pouvant endommager la batterie du véhicule comme blesser le personnel au montage et d'autre part à protéger efficacement contre l'oxydation au niveau des contacts, ceci d'autant plus si aucun revêtement n'est utilisé sur la barre omnibus (étain, nickel, etc.) pour obtenir un gain de coût.

Par ailleurs, ce capot de protection 9 peut présenter d'autres caractéristiques techniques avantageuses qui sont décrites dans la suite.

Tout d'abord, comme précédemment expliqué, un but complémentaire d'un tel capot de protection 9 réside dans le fait de bloquer de manière définitive les vis de fixation 4, nécessaires à la fixation du barre omnibus 3 à la source d'alimentation électrique, à l'aide des orifices prévus pour le passage des têtes 10 de vis 4. A cette fin, la largeur d'un orifice du capot 9 pour le passage des têtes 10 de vis 4 est prévu au plus égale au diamètre de la tête 10 de vis 4 qu'il loge. Avantageusement, la largeur de l'orifice du capot de protection 9 est inférieure, d'au moins 0,1 millimètre et d'au plus un millimètre, au diamètre de la tête 10 de vis 4. Ainsi, une fois la vis 4 dans sa position de vissage, qu'elle a pu atteindre éventuellement grâce à une certaine élasticité du capot de protection 9, la vis de fixation 4 est contrainte (forces de frottement) par les parois de l'orifice à demeurer dans cette position. Ce capot de protection 9 peut également avoir la fonction de maintenir la vis de fixation 4 droite de manière à éviter de rater ou d'achopper son vissage.

Avantageusement, l'orifice du capot de protection 9 présente une section de forme oblongue, non visible sur les figures annexées, la longueur de l'orifice étant supérieure à sa largeur.

Les capots de protection de l'état de la technique ont besoin à l'heure actuelle d'un outillage double car les orifices (pour le passage des vis de fixation) ne sont pas disposés de façon symétrique aux extrémités d'une barre omnibus 3. En effet, ces orifices sont désaxés tantôt à droite tantôt à gauche sur la barre omnibus, comme cela est visible sur la figure 1 annexée.

Ainsi, en prévoyant des orifices de forme oblongue, il n'est plus nécessaire d'utiliser autant d'outillages car les capots de protection 9 s'adaptent à l'une ou l'autre des extrémités d'une barre omnibus 3, quelque soit la disposition des orifices sur ce dernier 3. Par exemple, si l'on considère trente barres omnibus 3, cela fait, avec l'art antérieur, près de soixante outillages (un par côté), tandis qu'avec la solution selon l'invention, seuls six outils sont nécessaires.

Cette caractéristique avantageuse permet donc de diminuer la diversité des pièces d'outillages utilisées et ainsi de réduire les coûts d'outillage. Par ailleurs, cette solution permet un gain de temps lors du montage.

Avantageusement, comme cela est visible sur la figure 4, le capot de protection 9 présente, au niveau de son orifice pour le passage de la tête de vis, une partie 11 saillante, ou protubérante, s'étendant suivant l'axe longitudinal X'X de la vis de fixation 4, d'une longueur au moins égale à deux fois l'épaisseur de la tête 10 de vis 4.

Ainsi, même dans l'hypothèse où la vis de fixation 4 viendrait à se déplacer légèrement, par exemple après une utilisation longue et particulièrement contraignante du véhicule, la tête 10 de vis 4 se trouve toujours enserrer par la paroi 8, dans une sorte de cylindre (présentant une section de forme oblongue), l'empêchant notamment de parvenir au contact ou à proximité d'autres éléments électriquement conducteurs du véhicule.

## Revendications

1. Système de protection et d'isolation d'une barre omnibus, comportant une barre omnibus (3) et au moins une vis de fixation (4), comportant un corps (5) et une tête (10) de vis (4), pour la fixation entre ladite barre (3) et une source d'alimentation électrique, la barre omnibus (3) présentant un orifice pour le passage du corps (5) de chacune des vis (4), **caractérisé en ce que** la partie du corps (5) des vis (4) protubérante par rapport à la barre omnibus (3) est recouverte intégralement par un capuchon électriquement isolant (6, 7).

2. Système selon la revendication 1, **caractérisé en ce que** ledit capuchon (6, 7) est amovible.

3. Système selon la revendication 1 ou 2, **caractérisé en ce que** ledit capuchon (6, 7) consiste en une pluralité de manchons (6) individuels disposés respectivement sur chacune des vis de fixation (4).

4. Système selon la revendication 3, **caractérisé en ce que** les manchons (6) sont reliés entre eux par un revêtement électriquement isolant formant une couche de protection (7) sur la barre omnibus.

5. Système selon l'une au moins des revendications précédentes, **caractérisé en ce que** ledit capuchon (6, 7) comporte une languette protubérante (8) pour sa saisie par un opérateur.

6. Système selon l'une quelconque des revendications précédentes, **caractérisé en ce que** ledit capuchon (6, 7) est en matière plastique.

7. Système selon l'une quelconque des revendications précédentes, **caractérisé en ce qu'**il comprend en outre un capot de protection (9), électriquement isolant, recouvrant au moins partiellement la barre omnibus (3) et étant en contact avec le capuchon (6, 7).

8. Système selon la revendication 7, **caractérisé en ce que** le capot de protection (9) présente plusieurs orifices pour le passage respectifs des têtes (10) de vis de fixation (4) et **en ce que** la largeur des orifices du capot de protection (9) est au plus égale au diamètre de la tête (10) de vis (4).

9. Système selon la revendication 8, **caractérisé en ce que** la largeur de l'orifice du capot de protection (9) est inférieure, d'au moins 0,1 millimètre et d'au plus un millimètre, au diamètre de la tête de vis.

10. Véhicule automobile, **caractérisé en ce qu'**il comporte au moins un système de protection et d'isolation d'une barre omnibus selon l'une quelconque des revendications précédentes.

## Patentansprüche

1. System zum Schützen und Isolieren einer Sammelschiene, bestehend aus einer Sammelschiene (3) und mindestens einer Befestigungsschraube (4), bestehend aus einem Körper (5) und einem Kopf (10) von Schrauben (4), zur Befestigung zwischen diesen Schiene (3) und einer Stromversorgungsquelle, wobei die Sammelschiene (3) eine Öffnung für den Durchgang des Körpers (5) jeder der Schrauben (4) aufweist, **dadurch gekennzeichnet, dass** der Teil des Körpers (5) der aus der Stromschiene (3) herausragende Schrauben (4) ist vollständig von einer elektrisch isolierenden Kappe (6, 7) abgedeckt.

2. System nach Anspruch 1, **dadurch gekennzeichnet** in, daß die genannten Kappe (6, 7) abnehmbar ist.

3. System nach Anspruch 1 oder 2, **dadurch gekennzeichnet, dass** die Kappe (6, 7) aus mehreren einzelnen Hülsen (6) besteht, die jeweils auf jeder der Befestigungsschrauben (4) angeordnet sind.

4. System nach Anspruch 3, **dadurch gekennzeichnet, dass** die Hülsen (6) sind verbunden miteinander durch eine Beschichtung aus elektrisch isolierenden Bildung eine Schutzschicht (7) auf der Stromschiene.

5. System nach mindestens einem der vorhergehenden Ansprüche, **dadurch gekennzeichnet, dass** die Kappe (6, 7) für ihre Eingabe durch eine Bedienperson eine vorstehende Lasche (8) aufweist.

6. System nach einem der vorhergehenden Ansprüche, **dadurch gekennzeichnet, dass** die Haube (6,7) aus Kunststoff besteht.

7. System nach einem der vorhergehenden Ansprüche, **dadurch gekennzeichnet, dass** es ferner eine elektrisch isolierende Schutzabdeckung (9) umfasst, die zumindest teilweise die Sammelschiene (3) bedeckt und mit der Kappe (6, 7) in Kontakt steht.

8. System nach Anspruch 7, **dadurch gekennzeichnet, dass** die Schutzhülle (9) mehrere Löcher für den jeweiligen Durchgang der Köpfe (10) der Befestigungsschrauben (4) aufweist und dass die Breite der Löcher der Schutzhülle (9) höchstens gleich dem Durchmesser des Kopfes (10) der Schraube (4).

9. System nach Anspruch 8, **dadurch gekennzeichnet, dass** die Breite der Öffnung der Schutzabdeckung (9) um mindestens 0,1 Millimeter und höchstens einen Millimeter geringer ist als der Durchmesser des Schraubenkopfes.

10. Kraftfahrzeug, **dadurch gekennzeichnet, dass** es mindestens ein System zum Schützen und Isolieren einer Sammelschiene nach einem der vorhergehenden Ansprüche umfasst.

## Claims

1. System protection and insulation of an omnibus bar comprising a bus bar (3) and at least one fixing screw (4), comprising a body (5) and a head (10) screw (4) for fixing between said bar (3) and an electrical power source, the bus bar (3) having an orifice for the passage of the body (5) of each screw (4), **characterized in that** the body part (5) of screw (4) protruding relative to the bus bar (3) is fully covered by a cap of electrically insulating (6, 7).

2. System according to claim 1, **characterized in that** the said cap (6, 7) is removable.

3. System according to claim 1 or 2, **characterized in that** the said cap (6, 7) consists of a plurality of sleeves (6) individual arranged respectively on each of the screws for fastening (4).

4. System according to claim 3, **characterized in that** the sleeves (6) are connected together by a coating of electrically insulating forming a protective layer (7) on the busbar.

5. System according to the one at least of claims preceding, **characterized in that** the said hood (6, 7) comprises a protruding tongue (8) to its input by an operator.

6. System according to any of the claims preceding, **characterized in that** the said hood (6, 7) is made of plastic.

7. System according to any of the claims preceding, **characterized in that** it further comprises a protective cover (9), electrically insulating, at least partially covering the bus bar (3) and being in contact with the cap (6, 7).

8. System according to claim 7, **characterized in that** the protective cover (9) has several port for the passage of respective of the heads (10) fixing screws (4) and **in that** the width orifice hood protection (9) is at most equal to the diameter of the head (10) of the screw (4).

9. System according to claim 8, **characterized in that** the width of the orifice of the protective cover (9) is less, by at least 0.1 millimeter and at most one millimeter, than the diameter of the screw head.

10. Motor vehicle, **characterized in that** it comprises at least one system for protecting and isolating a bus bar according to any one of the preceding claims.
